# FASCICULE DE BREVET EUROPEEN

(11) **EP 2 398 700 B1**
(45) Date de publication et mention de la délivrance du brevet: **02.10.2013**
(21) Numéro de dépôt: 10705855.4
(22) Date de dépôt: 19.02.2010
(51) Int. Cl.: B63H 9/10

(54) **DISPOSITIF DE MANOEUVRE D'UNE VOILE**
EINRICHTUNG ZUM HANDHABEN EINES SEGELS
DEVICE FOR MANOEUVREING A SAIL

(30) Priorité: 23.02.2009 FR 0951131
(43) Date de publication de la demande: 28.12.2011
(73) Titulaire: STX FRANCE S.A., 44600 Saint Nazaire (FR)
(72) Inventeur: CORDIER, Stéphane, F-44210 Pornic (FR)
(74) Mandataire: Regimbeau
(86) Numéro de dépôt international: PCT/EP2010/052137
(87) Numéro de publication internationale: WO 2010/094770

(56) Documents cités:
- WO-A1-02/44021
- WO-A1-99/37537
- DE-A1- 2 608 471
- DE-A1- 3 035 028
- DE-A1- 3 718 414

## Description

La présente invention concerne un dispositif mécanisé, automatisé ou non, de manoeuvre d'une voile de navire.

Il s'agit plus précisément d'un dispositif permettant de hisser et d'affaler une voile, y compris une voile de très grandes dimensions pouvant atteindre plus de 1 000 m², et ce, de manière mécanisée et fiable, afin de pouvoir utiliser cette voile sur de grands yachts, mais aussi des navires de transport de charges ou de passagers, comme système de propulsion d'appoint. Un tel dispositif peut même être automatisé.

Afin de simplifier au maximum l'intervention humaine, de nombreux dispositifs mécanisés de manoeuvre des voiles ont été développés. Ils utilisent généralement un dispositif d'enrouleur placé dans l'étai, dans le mât, dans la bôme ou dans les vergues.

Toutefois, la technologie de l'enrouleur est limitée par sa capacité à maîtriser la qualité de l'enroulement de voiles de grandes dimensions, dont la surface est supérieure à plus de 1 000 m², qui plus est dans des conditions de vent fort.

D'autres solutions consistent à ferler la voile horizontalement sur la bôme ou sur le pont. Toutefois, ces techniques ne permettent pas de maîtriser la voile dans le cas d'une rafale de vent, et ceci peut provoquer des avaries sur la voile ou sur le navire, voire même faire courir un risque à d'éventuels membres d'équipage présents autour de la voile.

De ce fait, l'utilisation de ces dispositifs est limitée à des vents de force modérée, ce qui réduit considérablement l'intérêt de disposer de voiles comme mode de propulsion d'appoint.

On connait également d'après le document DE 3718414 un dispositif de manoeuvre d'une voile, qui comprend plusieurs espars horizontaux, aptes à coulisser le long d'un mât au niveau de leur partie médiane. Plusieurs voiles sont fixées chacune entre un espar supérieur et un espar inférieur. Les voiles peuvent être déployées en hissant l'espar supérieur, le long du mât, ce mouvement de l'espar provoquant une traction sur la partie supérieure de la voile. Inversement, les voiles sont affalées en faisant descendre l'espar supérieur le long du mât.

En position affalées, les voiles et les espars sont sur le pont et les voiles ne sont pas pliées correctement, ce qui provoque un encombrement important.

Un tel dispositif n'est donc pas utilisable pour des voiles de grandes dimensions.

On connait également d'après le document DE 26 08 471, un dispositif similaire dans lequel une voile est hissée par déplacement de l'espar supérieur le long du mât, la voile pouvant ensuite être tendue par une traction latérale.

Lorsque la voile est affalée, sa chute n'est pas guidée, de sorte que la voile peut battre au vent.

Un tel dispositif ne peut pas être utilisé pour des voiles de grandes dimensions et peut s'avérer dangereux pour le personnel à proximité.

L'invention a donc pour objectif de résoudre les inconvénients précités de l'état de la technique.

L'invention a notamment pour objectif de fournir un dispositif de manoeuvre qui permette :
- de hisser et d'affaler une voile de manière mécanisée et éventuellement entièrement automatisée, y compris une voile de grandes dimensions et d'un poids important,
- de le faire en toute sécurité pour l'équipage et pour le navire, tout en évitant d'abîmer la voile,
- d'utiliser ce dispositif aussi fréquemment que possible, y compris dans des conditions de vent relativement fort,
- de garantir un entretien minimum sur la voile et une grande longévité de celle-ci.

L'invention a également pour objectif de fournir un dispositif qui permette de maîtriser totalement la voile pendant les manoeuvres de hissage ou d'affalage, sans risque de voir une partie ou la totalité de la voile se mettre dans une position où, compte-tenu de sa taille et de son poids, un stockage en toute sécurité ne serait plus possible.

A cet effet, l'invention concerne un dispositif mécanisé de manoeuvre d'une voile de navire.

Conformément à l'invention, ce dispositif comprend :
- un mât,
- une bôme et une corne solidaires dudit mât, respectivement par l'une de leurs extrémités, dite "avant",
- un élément de guidage reliant les deux extrémités opposées, dites "arrières", de ladite bôme et de ladite corne, de sorte que cet élément de guidage s'étend parallèlement ou sensiblement parallèlement au mât et qu'il définit un cadre conjointement avec le mât, la bôme et la corne,
- une voile de forme rectangulaire ou sensiblement rectangulaire, solidaire de la bôme par son bord inférieur, dit "bordure", et munie sur ses deux bords latéraux, dits "guindant" et "chute", de moyens de guidage respectivement le long du mât et le long dudit élément de guidage,
- des moyens mécanisés pour hisser et affaler ladite voile à l'intérieur dudit cadre, tout en maintenant son guindant et sa chute guidés respectivement le long du mât et le long dudit élément de guidage.

Grace à ces caractéristiques de l'invention, la corne reste en place pendant que la voile est hissée ou affalée et en outre, le guidant et la chute de la voile sont maintenus, y compris pendant que la voile est affalée. Elle peut ainsi se ferler automatiquement au dessus de la bôme en accordéon.

Cette solution permet de stocker la voile en toute sécurité et d'effectuer des manoeuvres d'envoi et d'affalage de la voile rapides, mécanisées et sécurisées.

Selon d'autres caractéristiques avantageuses et non limitatives de l'invention, prises seules ou en combinaison :
- ledit élément de guidage est un câble ;
- la voile se compose de plusieurs panneaux, chaque panneau est muni le long de son guindant d'un organe de guidage sur le mât et le long de sa chute d'un organe de guidage sur ledit élément de guidage, et ces organes de guidage autorisant une rotation dudit panneau autour d'un axe longitudinal X₂-X'₂ reliant entre eux ces deux organes de guidage, cet axe de rotation X₂-X'₂ étant également parallèle ou sensiblement parallèle à la bôme, de sorte que la voile se replie en accordéon sur la bôme lorsqu'elle est affalée ;
- le mât comprend un rail de guidage longitudinal, l'organe de guidage du guindant de la voile comprend un chariot coulissant le long dudit rail de guidage, ce chariot étant muni d'un axe de rotation qui s'étend selon l'axe de rotation X2-X'2 et qui est reçu dans un palier de roulement solidaire du guindant de la voile ;
- le mât comprend un rail de guidage longitudinal, en ce que l'organe de guidage du guindant de la voile comprend un chariot coulissant le long dudit rail de guidage, ce chariot étant muni d'un axe qui s'étend selon l'axe de rotation X2-X'2 et dont l'extrémité est pourvue d'une rotule reçue dans un palier d'articulation multidirectionnelle solidaire du guindant de la voile ;
- l'organe de guidage de la chute de la voile est un coulisseau qui comprend un manchon coulissant le long de l'élément de guidage et qui est muni d'un axe de rotation qui s'étend selon l'axe de rotation X2-X'2, cet axe de rotation étant reçu dans un palier de roulement solidaire de la chute de la voile ;
- la voile comprend plusieurs panneaux, chaque panneau étant articulé au panneau voisin autour d'un axe X₁-X'₁, dit "d'articulation", parallèle ou sensiblement parallèle à la bôme ;
- chaque panneau est articulé au panneau voisin par une portion de matériau souple, une charnière ou une sangle ;
- au moins l'un des panneaux est muni d'une latte longitudinale qui s'étend selon l'axe de rotation X₂-X'₂ dudit panneau ;
- chaque panneau est fixé aux autres de façon amovible, de façon à pouvoir être désolidarisé des autres, démonté et remplacé ;
- les moyens mécanisés pour hisser et affaler la voile comprennent des moyens de mise sous tension du guindant et de la chute de la voile de manière synchronisée, afin qu'à tout moment pendant les phases de hissage et d'affalage de la voile, les points de drisse avant et arrière de ladite voile soient à la même hauteur ;
- la voile est réalisée en tissu, en matériau composite ou en métal.

L'invention concerne également un navire de transport de charges ou de passagers équipé du dispositif mécanisé de manoeuvre d'une voile précité.

D'autres caractéristiques et avantages de l'invention apparaîtront de la description qui va maintenant en être faite, en référence aux dessins annexés, qui en représentent, à titre indicatif mais non limitatif, plusieurs variantes de réalisation possibles.

Sur ces dessins :
- la figure 1 est une vue schématique de côté d'un dispositif mécanisé de manoeuvre d'une voile, conforme à une première variante de réalisation de l'invention,
- la figure 2 est une vue schématique de côté représentant une seconde variante de réalisation de l'invention,
- la figure 3 est une vue de côté représentant deux panneaux de la voile et ses systèmes de guidage,

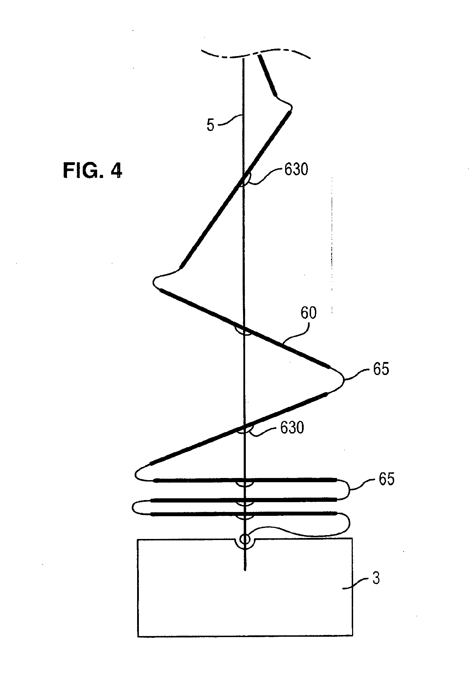

- la figure 4 est une vue schématique de la voile en position partiellement affalée,
- les figures 5 et 6 sont des vues de détail de deux variantes de réalisation des moyens de guidage du guindant de la voile,
- la figure 7 est une vue de détail d'une mode de réalisation des moyens de guidage de la chute de la voile, et
- la figure 8 est une vue en perspective, partielle, de la partie inférieure de la voile, de la bôme et du rail de guidage de l'extrémité libre de la bôme.

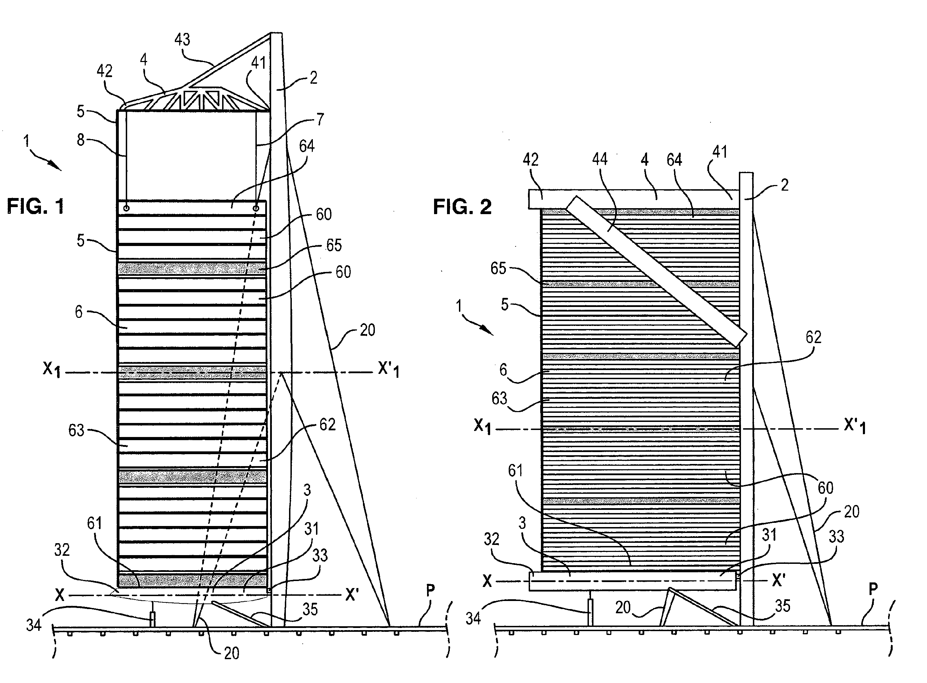

Le dispositif mécanisé de manoeuvre d'une voile conforme à l'invention porte la référence générale 1. Il va maintenant être décrit en liaison avec les figures 1 et 2.

Il est destiné à être installé sur le pont P d'un navire, de préférence un navire de transport de charges ou de passagers. Dans ce dernier cas, il sera installé sur le pont supérieur du navire. Plusieurs de ces dispositifs peuvent ainsi y être installés.

Ce dispositif comprend notamment un mât 2, une bôme 3, une corne 4, un élément de guidage longitudinal 5, tel qu'un câble et une voile 6.

Le mât 2 est érigé verticalement ou sensiblement verticalement sur le pont P. Il peut soit être autoportant, soit maintenu par tout moyen de fixation approprié, par exemple, de façon classique, par des haubans 20.

La bôme 3 et la corne 4 sont des espars qui s'étendent perpendiculairement ou sensiblement perpendiculairement au mât 2. Elles sont solidaires du mât 2 et montées sur celui-ci, de préférence de façon articulée, par l'une de leurs extrémités dite "avant".

Les extrémités avant de la bôme 3 et de la corne 4 portent respectivement les références numériques 31 et 41. Leurs extrémités arrières portent les références numériques 32, 42.

La terminologie "avant" et "arrière" est choisie par référence à l'avant et à l'arrière du navire.

L'élément de guidage vertical arrière 5 relie l'extrémité arrière 32 de la bôme 3 à l'extrémité arrière 42 de la corne 4, de sorte qu'il s'étend parallèlement ou sensiblement parallèlement au mât 2. De préférence, cet élément de guidage 5 est un câble fixé à ses deux bouts aux extrémités 32 et 42 et dans la suite de la description il sera décrit comme tel.

La tension du câble 5 peut éventuellement être réglée à l'aide d'un vérin hydraulique ou tout autre moyen de mise sous tension, non représenté sur les figures.

La voile 6 est de forme rectangulaire ou sensiblement rectangulaire. Elle présente un bord inférieur 61, dit "bordure", deux bords latéraux avant 62 et arrière 63, dits respectivement "guindant" et "chute" et un bord supérieur 64.

La voile 6 est fixée à la bôme par sa bordure 61.

L'ensemble constitué par le mât 2, la bôme 3, la corne 4 et le câble 5 constitue un cadre, à l'intérieur duquel la voile 6 peut être hissée ou affalée, tout en étant guidée latéralement par son guidant et sa chute, respectivement le long du mât 2 et du câble 5.

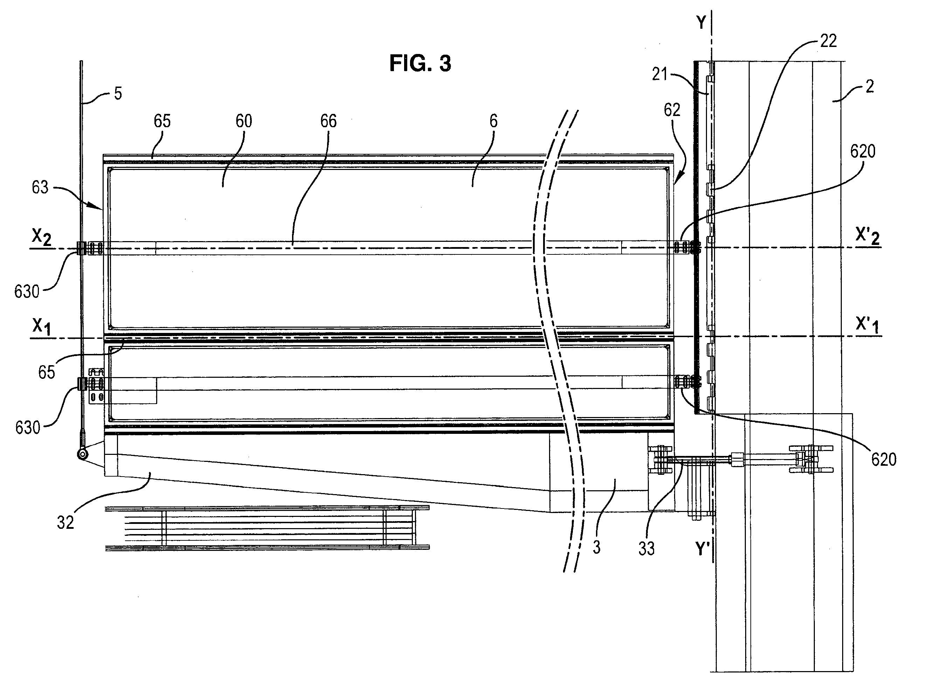

Le guindant 62 de la voile 2 est guidé le long du mât 2 par un système de guidage approprié. On peut en voir un mode de réalisation sur la figure 3.

Un rail de guidage longitudinal 21 est fixé le long du mât, en regard du guindant 62 de la voile 6. Par ailleurs, le guindant 62 est équipé d'une pluralité de chariots 620, aptes à coulisser le long dudit rail de guidage 21.

Ces chariots 620 sont solidaires de la voile 6 et répartis tout le long du guindant 62, de préférence à intervalles réguliers, de façon à guider la voile 6 sur toute sa hauteur.

Sur la variante représentée sur la figure 3, le rail de guidage 21 est monté articulé par rapport au mât 2, à l'aide de charnières 22, de sorte qu'il peut pivoter angulairement autour d'un axe vertical Y-Y' parallèle au mât 2. Ceci autorise le pivotement angulaire du guindant 62, ce qui peut être avantageux lorsque la voile 6 pivote en fonction de l'orientation du vent.

Selon une variante de réalisation simplifiée, non représentée sur les figures, le rail de guidage 21 est fixe.

D'autres moyens de guidage du guindant 62 peuvent également être envisagés, bien que non représentés. Le rail de guidage 21 peut par exemple être remplacé par une rainure ménagée longitudinalement sur le mât, les chariots 620 étant alors remplacés par des coulisseaux aptes à coulisser dans ladite rainure.

Par ailleurs, la chute 63 de la voile 6 est guidée le long du câble 5 par tout moyen de guidage approprié. A titre d'exemple, et comme représenté sur la figure 3, ces moyens de guidage peuvent consister en plusieurs coulisseaux 630, aptes à coulisser le long du câble 5 de guidage. Ces coulisseaux 630 sont solidaires de la voile 6 et sont de préférence répartis à intervalles réguliers le long de la chute, de façon à guider la voile 6 sur toute sa hauteur.

Ces coulisseaux seront décrits plus en détails ultérieurement.

Dans un mode de réalisation non représenté, le câble 5 pourrait être remplacé par un tube muni d'une fente longitudinale, constituant donc une glissière, et le coulisseau aurait alors la forme d'un galet apte à coulisser dans la glissière.

Le dispositif conforme à l'invention comprend également des moyens mécanisés pour hisser ou affaler la voile 6.

Conformément à l'invention, ces moyens mécanisés sont tels que la mise sous tension du guidant 62 et celle de la chute 63 se font de manière synchronisée, afin qu'à tout moment pendant les phases de hissage et d'affalage de la voile 6, les points de drisse avant et arrière de la voile soient à la même hauteur.

Un exemple de réalisation de ces moyens mécanisés est décrit ci-dessous.

En se reportant à la figure 1, on peut voir que ceux-ci comprennent, par exemple, deux cordages, dénommés "drisses", l'une référencée 7 permettant de hisser l'extrémité supérieure avant de la voile 6 le long du mât 2 et l'autre 8 permettant de hisser l'extrémité supérieure arrière de la voile 6 le long du câble 5.

Par ailleurs, la corne 4 et le mât 2 sont équipés sur leur surface extérieure ou intérieurement, de plusieurs poulies de renvoi qui permettent de ramener les drisses 7 et 8 jusqu'au niveau du pont P où chacune d'entre elles est engagée sur un winch de préférence électrique, non représenté sur les figures. L'actionnement de ces deux winchs dans un sens d'enroulement ou dans l'autre permet de hisser ou inversement d'affaler la voile 6.

L'extrémité avant 31 de la bôme 3 est par ailleurs montée articulée à la base du mât 2 au moyen d'une articulation dénommée "vit-de mulet" 33.

Le réglage de la voile 6 se fait notamment par ajustement de la position de la bôme 3.

Dans le plan horizontal, les mouvements angulaires de la bôme 3 permettent de régler l'incidence de la voile par rapport au vent. L'orientation de la bôme 3 dans le plan horizontal est réalisée par exemple par un palan d'écoute de grand voile 34, bien connu de l'homme du métier, qui ne sera pas décrit plus en détails. Une multitude de systèmes peuvent être conçus afin d'assurer cette fonction, par exemple un vérin hydraulique dont les tuyaux d'alimentation en fluide hydraulique transiteraient à proximité du vit de mulet.

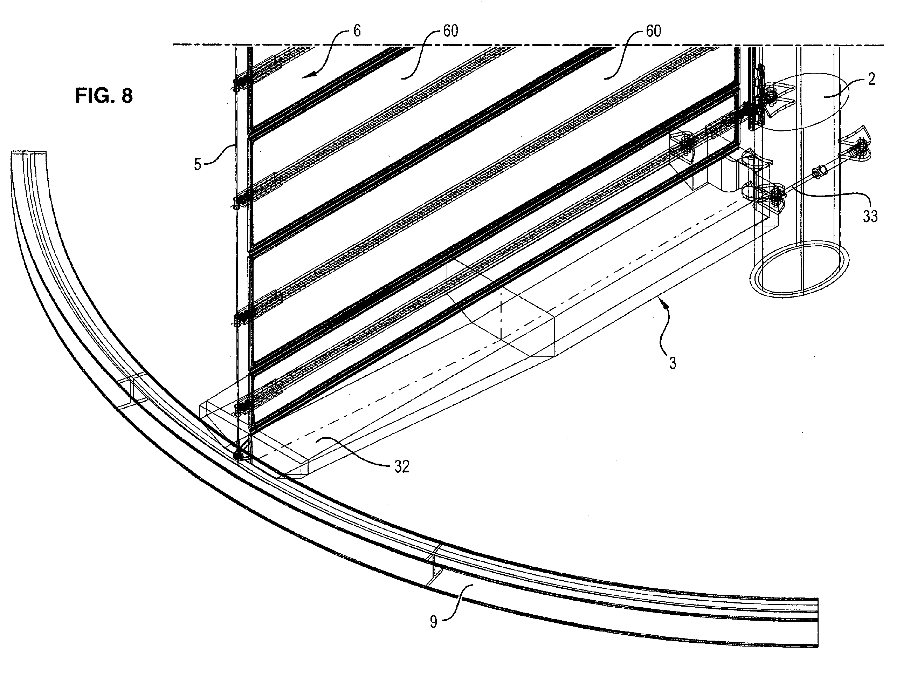

Selon une autre possibilité représentée sur la figure 8, l'extrémité arrière 32 de la bôme 3 est munie d'un chariot (non visible sur la figure), apte à coulisser dans un rail en arc de cercle 9.

Dans le plan vertical, les mouvements de la bôme 3 permettent de tendre ou de relâcher la chute 63 et d'ajuster le creux de la voile 6.

Le déplacement de la bôme 3 dans un plan vertical est obtenu par exemple par un hale-bas 35, également bien connu de l'homme du métier.

De façon similaire, la corne 4 peut être montée articulée par rapport au mât 2 au niveau de son extrémité avant 41, au moyen d'une articulation de type "vit de mulet". Ceci permet de pouvoir se déplacer dans un plan horizontal et dans un plan vertical.

Son déplacement dans le plan horizontal est induit par le palan de grand-voile 34, le mouvement de la corne 4 suivant celui de la bôme 3.

Selon une première variante de réalisation représentée sur la figure 1, la corne 4 est soutenue par un câble ou une drisse 43 repris en tête de mât. Grâce à des poulies de renvoi ménagées dans le mât 2, l'extrémité de ce câble 43 peut être renvoyée sur un winch non représenté sur les figures, fixé par exemple au niveau du pont P. L'enroulement plus ou moins important de ce câble 43 permet de faire pivoter la corne 4 dans le plan vertical.

Selon une autre variante de réalisation représentée sur la figure 2, la corne 4 peut également être soutenue par une structure de type "wishbone" 44, dont l'une des extrémités est solidaire du mât 2 et l'autre de la corne 4.

La corne 4 peut également être fixe par rapport au mât 2 dans un plan horizontal et dans un plan vertical.

Le dispositif conforme à l'invention peut également être automatisé, c'est-à-dire que le fonctionnement des moyens mécanisés pour hisser et affaler la voile, des moyens de déplacement angulaire de la bôme 3 et des moyens de réglage de la position angulaire de la bôme 3 et de la corne 4 dans un plan vertical, peut être piloté par un automate programmable ou un ordinateur, en fonction de paramètres liés par exemple à la force et/ou à l'orientation du vent.

La structure de la voile 6 va maintenant être décrite plus en détails.

Cette voile peut être de grandes dimensions, notamment lorsqu'elle est destinée à être utilisée sur des navires de transport de charges ou de passagers. Dans ce dernier cas, sa surface pourra atteindre ou même dépasser 1 000 m².

La voile 6 est de préférence réalisée dans un tissu pour voile très épais, mais peut également être réalisée dans un matériau composite relativement rigide ou bien encore en métal.

De façon avantageuse, la voile 6 peut être constituée par l'assemblage de plusieurs panneaux horizontaux rectangulaires 60, de préférence de dimensions et de réalisation identiques, le panneau inférieur pouvant éventuellement être de plus petites dimensions.

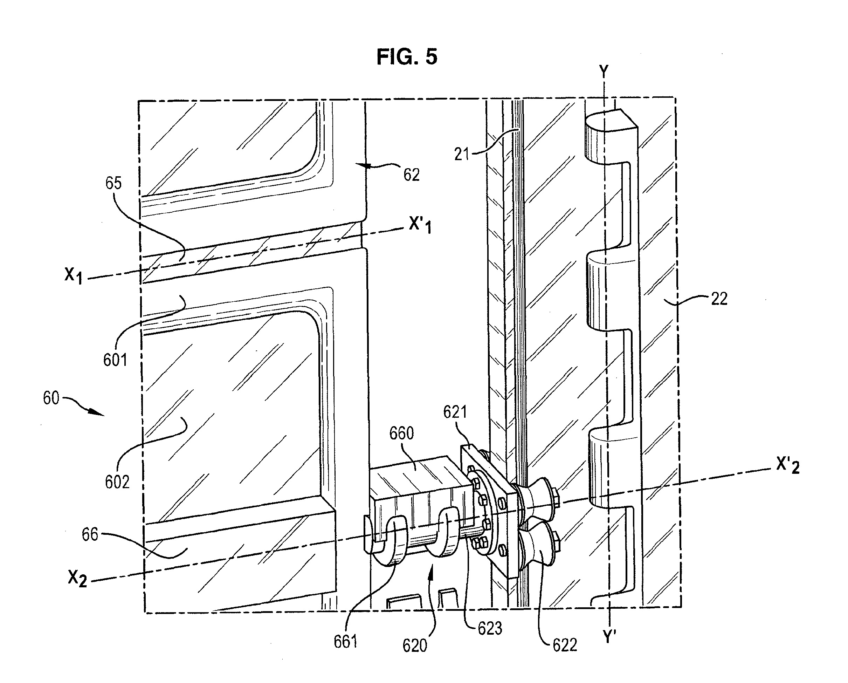

Comme cela apparait mieux sur la figure 5, un panneau 60 peut comporter un cadre périphérique rigide 601 et une partie centrale 602 plus souple, par exemple réalisée en tissu pour voile très épais.

En fonction de leur structure et de la nature du matériau utilisé pour la réalisation de la voile, les panneaux 60 peuvent être plus ou moins rigides. Lorsqu'ils sont rigides, ils sont avantageusement articulés par rapport au panneau 60 voisin autour d'un axe dit "d'articulation" X₁-X'₁, parallèle ou sensiblement parallèle à l'axe longitudinal X-X' de la bôme 3, (voir notamment les vues de détail des figures 3 et 5).

De façon avantageuse, chaque panneau 60 est relié au panneau 60 adjacent par une portion de matériau souple 65.

Selon d'autres variantes non représentées sur les figures, cette portion 65 de matériau souple pourrait être remplacée par des sangles ou des charnières. Ces éléments ont pour but de faciliter l'articulation de deux panneaux 60 l'un par rapport à l'autre autour d'un axe X₁-X'₁.

L'articulation des panneaux 60 de la voile les uns par rapport aux autres permet d'empiler automatiquement ces panneaux lorsque la voile est affalée. La voile 6 se replie ainsi en forme d'accordéon sur la bôme 3, comme représenté sur la figure schématique 4.

Comme expliqué précédemment, la corne 4 est fixée en partie haute du mât et elle reste dans cette position y compris pendant que la voile 6 est hissée ou affalée. Le câble 5 reste également dans sa position parallèle ou sensiblement parallèle au mât 2, de sorte que lorsque la voile 6 est affalée, elle continue d'être maintenue par son guindant 62 le long du mât 2 et par sa chute 63 le long du câble 5.

A cet effet, les coulisseaux 630 et chariots 620 (organes de guidage) sont adaptés de façon à autoriser une rotation de chaque panneau 60 suivant un axe longitudinal X₂-X'₂ passant par un chariot 620 et un coulisseau 630. Cet axe de rotation X₂-X'₂ est parallèle aux axes X₁-X'₁ et X-X'.

A cet effet, la voile 6 comprend avantageusement des lattes de rigidification 66, fixées le long de la voile 6, comme on peut le voir sur la figure 3 ou s'étendant au centre du cadre 601, comme on peut le voir sur la figure 5. Ces lattes 66 s'étendent le long de l'axe de rotation X₂-X'₂ tel que précédemment défini.

Les lattes 66 permettent de renforcer le panneau 60 en compression.

De façon avantageuse, les organes de guidage en translation 620 et 630 de la voile 6 sont solidaires respectivement de l'une et l'autre des extrémités de la latte 66.

Un premier mode de réalisation du chariot de guidage 620 va maintenant être décrit en faisant référence à la figure 5.

Le chariot 620 comprend une platine 621 équipée de galets 622, ici au nombre de quatre, permettant de guider la platine 621 en coulissement le long du rail 21. Un axe de rotation 623 est fixé sur la platine 621. Il s'étend en direction du guindant 62 de la voile, selon l'axe X2-X'2 précédemment défini. Cet axe de rotation 623 est reçu dans un palier de roulement 661 fixé à l'intérieur de l'extrémité 660 en saillie de la latte 66.

Ce montage autorise la rotation du panneau 60 autour de l'axe X2-X'2.

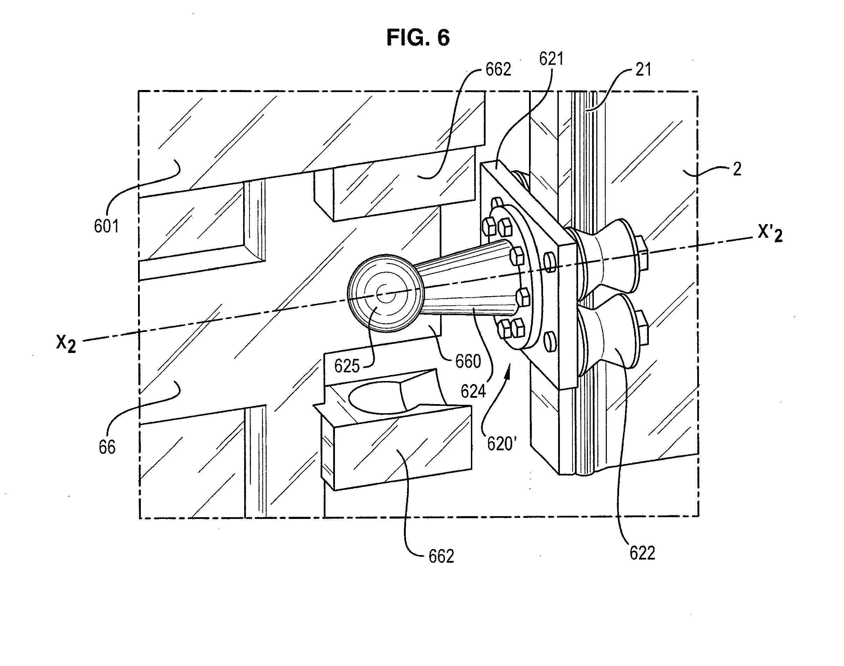

Un second mode de réalisation du chariot de guidage va maintenant être décrit en faisant référence à la figure 6. Les éléments identiques portent les mêmes références numériques. Ce chariot est référencé 620'.

Dans ce mode de réalisation, un axe 624 est fixé sur la platine 621, il est équipé à son extrémité libre d'une rotule 625. Cet axe 624 s'étend en direction du guindant 62 de la voile, selon l'axe X2-X'2 précédemment défini. La rotule 625 est reçue dans un palier 662 d'articulation multidirectionelle, fixé à l'intérieur de l'extrémité 660 en saillie de la latte 66. Sur la figure 6, et afin de faciliter la compréhension du fonctionnement, ce palier 662 a été représenté en vue éclatée (en deux parties). Normalement, ces deux parties sont assemblées.

Ce montage autorise non seulement la rotation du panneau 60 autour de l'axe X2-X'2, mais également un pivotement angulaire multidirectionnel autour de l'axe X2-X'2 selon un angle dont la valeur est déterminée par le débattement autorisé de la voile 6 dans le plan horizontal, compatible à celui donné à la bôme. Il donne un degré de souplesse supplémentaire au dispositif.

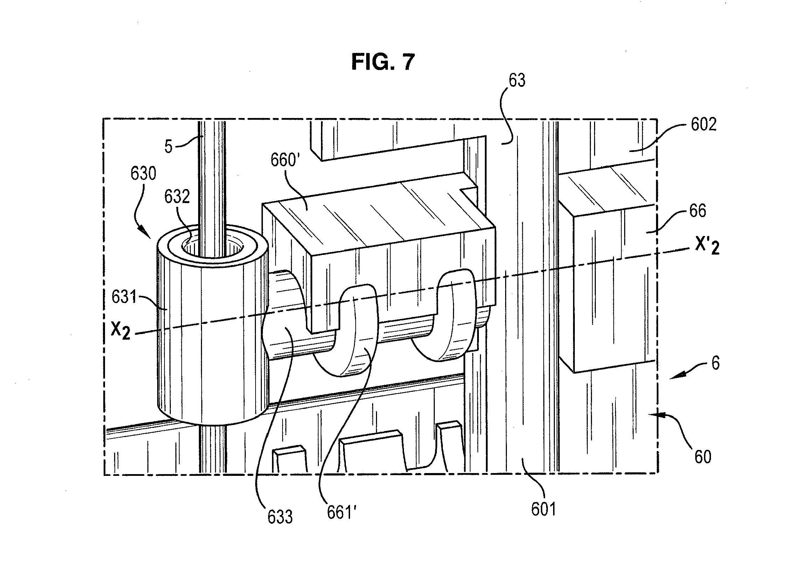

Un exemple de réalisation du coulisseau 630 va maintenant être décrit en faisant référence à la figure 7.

Le coulisseau 630 comprend un manchon 631 percé d'un orifice longitudinal 632 à l'intérieur duquel est engagé le câble 5. Le manchon 631 peut coulisser le long de ce câble 5. Un axe de rotation 633 est fixé sur le manchon 631. Il s'étend en direction de la chute 63 de la voile 6, selon l'axe X2-X'2 précédemment défini. Cet axe de rotation 633 est reçu dans un palier de roulement 661' fixé à l'intérieur de l'extrémité 660' en saillie de la latte 66.

Ce montage autorise la rotation du panneau 60 autour de l'axe X2-X'2.

On notera que dans les descriptions ci-dessus des chariots 620, 620' et du coulisseau 630, les axes de rotation 623, 624 et 633 sont solidaires respectivement des chariots 620, 620' et du coulisseau 630 et que les paliers de roulement 661, 662 et 661' sont solidaires de la latte 66. L'inverse est également possible.

Enfin, selon une variante non représentée sur les figures, le rail de guidage 21 prévu sur le mât 2 peut également être remplacé par un câble. Dans ce cas, le chariot de guidage 620 est remplacé par un coulisseau 630.

La combinaison du pivotement des panneaux 60 autour des axes X2-X'2 et des parties souples 65 (ou équivalents) permet de replier la voile 6 en accordéon sur la bôme 3. Celle-ci est donc conçue pour supporter le poids de la voile repliée. A titre purement indicatif, cette bôme 3 peut présenter une largeur de plusieurs mètres, par exemple quatre mètres et une longueur d'une vingtaine de mètres.

Une fois repliée, la voile n'offre plus de prise au vent et ne risque pas de se déplier de manière intempestive.

Avantageusement, la hauteur des chariots et coulisseaux est égale à l'épaisseur d'un panneau afin que lorsque la voile est pliée sur la bôme, les panneaux empilés restent plans et horizontaux.

Lorsque la voile 6 est réalisée dans un matériau du type matériau composite rigide ou métal, elle peut être légèrement formée afin de donner à la voile une fois déployée, une cambrure optimisée aérodynamiquement afin de fournir une portance maximale. Dans ce dernier cas, certains panneaux 60 peuvent présenter une forme légèrement différente des autres.

Enfin, de préférence, chaque panneau 60 est conçu pour pouvoir être désolidarisé des autres panneaux contigus, afin de pouvoir être remplacé en cas d'usure ou d'avarie. Des panneaux de remplacement 60 pourraient ainsi être stockés à bord du navire, afin de permettre le remplacement d'un panneau défectueux pendant une navigation.

Cette désolidarisation peut par exemple être effectuée en prévoyant des moyens de fixation complémentaires du type male/femelle entre le bord d'un panneau 60 et la portion de matériau souple 65, par exemple une nervure et une gorge à l'intérieur de laquelle ladite nervure peut être introduite par coulissement.

## Revendications

1. Dispositif mécanisé (1) de manoeuvre d'une voile de navire, comprenant :
- un mât (2),
- une bôme (3) et une corne (4) qui sont des espars s'étendant perpendiculairement ou sensiblement perpendiculairement audit mât (2) et qui sont solidaires dudit mât, respectivement par l'une de leurs extrémités (31, 41), dite "avant",
- un élément (5), tel qu'un câble, reliant les deux extrémités opposées (32, 42), dites "arrières", de ladite bôme (3) et de ladite corne (4), de sorte que cet élément (5) s'étend parallèlement ou sensiblement parallèlement au mât (2) et qu'il définit un cadre conjointement avec le mât, la bôme et la corne,
- une voile (6) de forme rectangulaire ou sensiblement rectangulaire, solidaire de la bôme (3) par son bord inférieur (61), dit "bordure", et munie sur son bord latéral, dit "guindant" (62), de moyens de guidage (620, 620', 21) le long du mât (2),
ce dispositif étant **caractérisé en ce que** ladite voile (6) est munie sur son bord latéral, dit "chute" (63), de moyens de guidage (630) le long dudit élément (5) qui constitue un élément de guidage, et **en ce qu'**il comprend des moyens mécanisés (7, 8) de hissage et d'affalage de ladite voile à l'intérieur dudit cadre, tout en maintenant son guindant (62) et sa chute (63) guidés respectivement le long du mât (2) et le long dudit élément de guidage (5).

2. Dispositif selon la revendication 1, **caractérisé en ce que** ladite bôme (3) et ladite corne (4) sont montées articulées sur le mât (2) par leurs extrémités avant (31, 41) respectives.

3. Dispositif selon la revendication 1 ou 2, **caractérisé en ce que** la voile (6) se compose de plusieurs panneaux (60), **en ce que** chaque panneau (60) est muni le long de son guindant (62) d'un organe de guidage (620, 620') sur le mât (2) et le long de sa chute (63) d'un organe de guidage (630) sur ledit élément de guidage (5), et **en ce que** chaque panneau (60) est monté rotatif par rapport auxdits organes de guidage (620, 620', 630), cette rotation dudit panneau (60) s'effectuant autour d'un axe longitudinal X₂-X'₂ reliant entre eux ces deux organes de guidage (620, 620' ; 630), cet axe de rotation X₂-X'₂ étant également parallèle ou sensiblement parallèle à la bôme (3), de sorte que la voile (6) se replie en accordéon sur la bôme (3) lorsqu'elle est affalée.

4. Dispositif selon la revendication 3, **caractérisé en ce que** le mât (2) comprend un rail de guidage longitudinal (21), **en ce que** l'organe de guidage du guindant (62) de la voile (6) comprend un chariot (620) coulissant le long dudit rail de guidage (21), ce chariot étant muni d'un axe de rotation (623) qui s'étend selon l'axe de rotation X2-X'2 et qui est reçu dans un palier de roulement (661) solidaire du guindant (62) de la voile.

5. Dispositif selon la revendication 3, **caractérisé en ce que** le mât (2) comprend un rail de guidage longitudinal (21), **en ce que** l'organe de guidage du guindant (62) de la voile (6) comprend un chariot (620') coulissant le long dudit rail de guidage (21), ce chariot étant muni d'un axe (624) qui s'étend selon l'axe de rotation X2-X'2 et dont l'extrémité est pourvue d'une rotule (625) reçue dans un palier d'articulation multidirectionnelle (662) solidaire du guindant (62) de la voile.

6. Dispositif selon la revendication 3, 4 ou 5, **caractérisé en ce que** l'organe de guidage de la chute (63) de la voile est un coulisseau (630) qui comprend un manchon (631) coulissant le long de l'élément de guidage (5) et qui est muni d'un axe de rotation (633) qui s'étend selon l'axe de rotation X2-X'2, cet axe de rotation (633) étant reçu dans un palier de roulement (661') solidaire de la chute (63) de la voile (6).

7. Dispositif selon l'une des revendications précédentes, **caractérisé en ce que** la voile (6) comprend plusieurs panneaux (60), chaque panneau (60) étant articulé au panneau voisin autour d'un axe X₁-X'₁, dit "d'articulation", parallèle ou sensiblement parallèle à la bôme (3).

8. Dispositif selon la revendication 7, **caractérisé en ce que** chaque panneau (60) est articulé au panneau (60) voisin par une portion de matériau souple (65), une charnière ou une sangle.

9. Dispositif selon l'une des revendications 3 à 8, **caractérisé en ce qu'**au moins l'un des panneaux (60) est muni d'une latte longitudinale (66) qui s'étend selon l'axe de rotation X₂-X'₂ dudit panneau.

10. Dispositif selon l'une des revendications 3 à 9, **caractérisé en ce que** chaque panneau (60) est fixé aux autres de façon amovible, de façon à pouvoir être désolidarisé des autres, démonté et remplacé.

11. Dispositif selon l'une des revendications précédentes, **caractérisé en ce que** les moyens mécanisés de hissage et d'affalage de la voile (6) comprennent des moyens de mise sous tension du guindant (62) et de la chute (63) de la voile de manière synchronisée, afin qu'à tout moment pendant les phases de hissage et d'affalage de la voile 6, les points de drisse avant et arrière de ladite voile soient à la même hauteur.

12. Dispositif selon l'une des revendications précédentes, **caractérisé en ce que** la voile (6) est réalisée en tissu, en matériau composite ou en métal.

13. Navire de transport de charges ou de passagers, **caractérisé en ce qu'**il est équipé d'un dispositif mécanisé (1) de manoeuvre d'une voile selon l'une des revendications précédentes.

## Patentansprüche

1. Mechanisierte Vorrichtung (1) zur Betätigung eines Schiffsegels, umfassend:
- einen Mast (2),
- einen Baum (3) und eine Rah (4), die Rundhölzer sind, die sich senkrecht oder im Wesentlichen senkrecht zu dem Mast (2) erstrecken und die mit dem Mast jeweils durch eines, so genanntes "vorderes", ihrer Enden (31, 41) fest verbunden sind,
- ein Element (5), wie ein Tau, das die zwei entgegengesetzten, so genannten "hinteren", Enden (32, 42) des Baums (3) und der Rah (4) verbindet, derart, dass sich dieses Element (5) parallel oder im Wesentlichen parallel zum Mast (2) erstreckt und dass es gemeinsam mit dem Mast, dem Baum und der Rah einen Rahmen bildet,
- ein Segel (6) mit rechteckiger oder im Wesentlichen rechteckiger Form, das mit dem Baum (3) über seine untere Kante (61), so genanntes "Unterliek", fest verbunden ist, und an seiner Seitenkante, so genanntes "Vorliek" (62), mit Mitteln zur Führung (620, 620', 21) entlang des Mastes (2) versehen ist,
wobei diese Vorrichtung **dadurch gekennzeichnet ist, dass** das Segel (6) an seiner Seitenkante, so genanntes "Achterliek" (63), mit Mitteln zur Führung (630) entlang des Elements (5), das ein Führungselement bildet, versehen ist, und dass sie mechanisierte Mittel (7, 8) zum Hissen und Einholen des Segels innerhalb des Rahmens unter gleichzeitigem Festhalten seines Vorlieks (62) und Achterlieks (63), die entlang des Mastes (2) bzw. entlang des Führungselements (5) geführt werden, umfasst.

2. Vorrichtung nach Anspruch 1, **dadurch gekennzeichnet, dass** der Baum (3) und die Rah (4) an dem Mast (2) über ihre jeweiligen vorderen Enden (31, 41) angelenkt sind.

3. Verfahren nach Anspruch 1 oder 2, **dadurch gekennzeichnet, dass** das Segel (6) aus mehreren Feldern (60) besteht, dass jedes Feld (60) entlang seines Vorlieks (62) mit einem Organ zur Führung (620, 620') an dem Mast (2) und entlang seines Achterlieks (63) mit einem Organ zur Führung (630) an dem Führungselement (5) versehen ist, und dass jedes Feld (60) relativ zu den Führungsorganen (620, 620', 630) drehbar montiert ist, wobei diese Drehung des Feldes (60) um eine Längsachse X₂-X'₂ erfolgt, die diese zwei Führungsorgane (620, 620'; 630) miteinander verbindet, wobei diese Rotationsachse X₂-X'₂ auch parallel oder im Wesentlichen parallel zu dem Baum (3) ist, derart, dass sich das Segel (6) ziehharmonikaförmig auf den Baum (3) faltet, wenn es eingeholt wird.

4. Vorrichtung nach Anspruch 3, **dadurch gekennzeichnet, dass** der Mast (2) eine längsgerichtete Führungsschiene (21) umfasst, dass das Organ zur Führung des Vorlieks (62) des Segels (6) einen Schlitten (620) umfasst, der entlang der Führungsschiene (21) gleitet, wobei dieser Schlitten mit einer Rotationsachse (623) versehen ist, die sich entlang der Rotationsachse X₂-X'₂ erstreckt und die in einem Wälzlager (61) aufgenommen ist, das mit dem Vorliek (62) des Segels fest verbunden ist.

5. Vorrichtung nach Anspruch 3, **dadurch gekennzeichnet, dass** der Mast (2) eine längsgerichtete Führungsschiene (21) umfasst, dass das Organ zur Führung des Vorlieks (62) des Segels (6) einen Schlitten (620') umfasst, der entlang der Führungsschiene (21) gleitet, wobei dieser Schlitten mit einer Achse (624) versehen ist, die sich entlang der Rotationsachse X₂-X'₂ erstreckt und deren Ende mit einer Gelenkverbindung (625) versehen ist, die in einem vielseitig ausrichtbaren Gelenklager (662) aufgenommen ist, das mit dem Vorliek (62) des Segels fest verbunden ist.

6. Vorrichtung nach Anspruch 3, 4, oder 5, **dadurch gekennzeichnet, dass** das Organ zur Führung des Achterlieks (63) des Segels ein Schieber (630) ist, der eine Hülse (631) umfasst, die entlang des Führungselements (5) gleitet und die mit einer Rotationsachse (633) versehen ist, die sich entlang der Rotationsachse X₂-X'₂ erstreckt, wobei diese Rotationsachse (633) in einem Wälzlager (661') aufgenommen ist, das mit dem Achterliek (63) des Segels (6) fest verbunden ist.

7. Vorrichtung nach einem der vorhergehenden Ansprüche, **dadurch gekennzeichnet, dass** das Segel (6) mehrere Felder (60) umfasst, wobei jedes Feld (60) an dem benachbarten Feld um eine Achse X₁-X'₁, so genannte "Gelenkachse", angelenkt ist, die parallel oder im Wesentlichen parallel zu dem Baum (3) ist.

8. Vorrichtung nach Anspruch 7, **dadurch gekennzeichnet, dass** jedes Feld (60) an dem benachbarten Feld (60) durch einen Bereich aus weichem Material (65), ein Scharnier oder einen Riemen angelenkt ist.

9. Vorrichtung nach einem der Ansprüche 3 bis 8, **dadurch gekennzeichnet, dass** mindestens eines der Felder (60) mit einer längsgerichteten Leiste (66) versehen ist, die sich entlang der Rotationsachse X₂-X'₂ des Feldes erstreckt.

10. Vorrichtung nach einem der Ansprüche 3 bis 9, **dadurch gekennzeichnet, dass** jedes Feld (60) an den anderen entfernbar befestigt ist, derart, dass es von den anderen gelöst, demontiert und ausgetauscht werden kann.

11. Vorrichtung nach einem der vorhergehenden Ansprüche, **dadurch gekennzeichnet, dass** die mechanisierten Mittel zum Hissen und Einholen des Segels (6) Mittel zum Unter-Spannung-Bringen des Vorlieks (62) und des Achterlieks (63) des Segels auf synchronisierte Weise umfassen, damit die vorderen und hinteren Aufzugspunkte des Segels während der Phasen des Hissens und des Einholens des Segels (6) zu jeder Zeit auf derselben Höhe sind.

12. Vorrichtung nach einem der vorhergehenden Ansprüche, **dadurch gekennzeichnet, dass** das Segel (6) aus Stoff, aus Verbundmaterial oder aus Metall hergestellt ist.

13. Schiff zum Transport von Lasten oder Fahrgästen, **dadurch gekennzeichnet, dass** es mit einer mechanisierten Vorrichtung (1) zur Betätigung eines Segels nach einem der vorhergehenden Ansprüche ausgestattet ist.

## Claims

1. A mechanised device (1) for manipulating a ship's sail comprising:
- a mast (2),
- a boom (3) and a gaff (4) which are spars which extend perpendicular or substantially perpendicular to the mast (2) and which are secured to said mast, respectively via one of their so-called "fore" ends (31, 41),
- an element (5), such as a cable, connecting the two opposite so-called "aft" ends (32, 42) of said boom (3) and of said gaff (4), so that this element (5) extends parallel or substantially parallel to the mast (2) and so that it defines a frame jointly with the mast, the boom and the gaff,
- a sail (6) of rectangular or substantially rectangular shape secured to the boom (3) via its lower so-called "foot" edge (61) and provided on its side edge called "luff" (62) with guiding means (620, 620', 21) along the mast (2), this device being **characterized in that** said sail (6) is provided on its side edge called "leech" (63) with guiding means (630) along said element (5) which constitutes a guiding element and **in that** it comprises mechanised means (7, 8) of hoisting and lowering said sail inside said frame, whilst maintaining the guiding of its luff (62) and leech (63) respectively along the mast (2) and along said guiding element (5) .

2. The device according to claim 1, **characterized in that** said boom (3) and said gaff (4) are hinge-mounted on the mast (2) at their respective fore ends (31, 41).

3. The device according to claim 1 or 2, **characterized in that** the sail (6) is composed of several panels (60), **in that** each panel (60) is provided along its luff (62) with a guiding member (620, 620') on the mast (2) and along its leech (63) with a guiding member (630) on said guiding element (5), and **in that** each panel (60) is rotatably mounted with regard to said guiding members (620, 620', 630) this rotation of said panel (60) occurring around a longitudinal axis X₂-X'₂ joining together these two guiding members (620, 620'; 630), this axis of rotation X₂-X'₂ also being parallel or substantially parallel to the boom (3) so that the sail (6) is folded in an accordion fold on the boom (3) when it is lowered.

4. The device according to claim 3, **characterized in that** the mast (2) comprises a longitudinal guide rail (21), **in that** the guiding member of the luff (62) of the sail (6) comprises a traveller (620) sliding along said guide rail (21), this traveller being provided with a rotating spindle (623) which extends over the axis of rotation X₂-X'₂ and which is received in an antifriction bearing (661) secured to the luff (62) of the sail.

5. The device according to claim 3, **characterized in that** the mast (2) comprises a longitudinal guide rail (21), **in that** the guiding member of the luff (62) of the sail (6) comprises a traveller (620') sliding along said guide rail (21), this traveller being provided with a pin (624) which extends over the axis of rotation X₂-X'₂ and whose end is provided with a ball joint (625) received in a multi-directional hinge bearing (662) secured to the luff (62) of the sail.

6. The device according to claim 3, 4 or 5 **characterized in that** the guiding member of the leech (63) of the sail is a slide (630) which comprises a sleeve (631) sliding along the guiding element (5) and which is provided with a rotating spindle (633) which extends over the axis of rotation X₂-X'₂, this rotating spindle (633) being received in an antifriction bearing (661') secured to the leech (63) of the sail (6).

7. The device according to one of the preceding claims, **characterized in that** the sail (6) comprises several panels (60), each panel (60) being hinged on the adjacent panel around a so-called "hinge" axis X₁-X'₁, parallel or substantially parallel to the boom (3).

8. The device according to claim 7, **characterized in that** each panel (60) is hinged on the adjacent panel (60) via a portion of flexible material (65), a hinge or a strap.

9. The device according to one of claims 3 to 8, **characterized in that** at least one of the panels (60) is provided with a longitudinal batten (66) which extends over the axis of rotation X₂-X'₂ of said panel.

10. The device according to one of claims 3 to 9, **characterized in that** each panel (60) is removably attached to the others so that it can be separated from the others, dismounted and replaced.

11. The device according to one of the preceding claims, **characterized in that** the mechanised means of hoisting and lowering the sail (6) comprise means for tensioning the luff (62) and the leech (63) of the sail in synchronized manner, so that at any time during the phases of hoisting and lowering the sail (6), the fore and aft halyard points of the said sail are at the same height.

12. The device according to one of the preceding claims, **characterized in that** the sail (6) is made in fabric, in composite material or in metal.

13. Cargo or passenger ship **characterized in that** it is equipped with a mechanised device (1) for manipulating a sail according to one of the preceding claims.
